(19) **Europäisches Patentamt**
**European Patent Office**
**Office européen des brevets**

(11) **EP 3 530 023 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(51) Int Cl.:
*H04W 12/00* (2009.01)    *H04L 9/32* (2006.01)
*H04W 12/08* (2009.01)

(21) Anmeldenummer: **17784262.2**

(86) Internationale Anmeldenummer:
**PCT/EP2017/075859**

(22) Anmeldetag: **10.10.2017**

(87) Internationale Veröffentlichungsnummer:
**WO 2018/077610 (03.05.2018 Gazette 2018/18)**

(54) **GEBÄUDE- ODER EINFRIEDUNGSABSCHLUSSSCHLIESS- UND/ODER -ÖFFNUNGSVORRICHTUNG SOWIE VERFAHREN ZUM BETRIEB EINES GEBÄUDE- ODER EINFRIEDUNGSABSCHLUSSES**

BUILDING OR ENCLOSURE TERMINATION CLOSING AND/OR OPENING APPARATUS, AND METHOD FOR OPERATING A BUILDING OR ENCLOSURE TERMINATION

DISPOSITIF DE FERMETURE ET/OU D'OUVERTURE D'UNE FERMETURE D'UN ENCLOS OU D'UN BÂTIMENT AINSI QUE PROCÉDÉ DE FONCTIONNEMENT D'UNE FERMETURE D'UN ENCLOS OU D'UN BÂTIMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2016 DE 102016120262**
                **08.11.2016 DE 102016121376**

(43) Veröffentlichungstag der Anmeldung:
**28.08.2019 Patentblatt 2019/35**

(73) Patentinhaber: **Hörmann KG Antriebstechnik**
**33803 Steinhagen (DE)**

(72) Erfinder:
• **JACOB, Florian**
**33803 Steinhagen (DE)**
• **SCHMALENSTRÖER, Jörg**
**33803 Steinhagen (DE)**

(74) Vertreter: **KASTEL Patentanwälte PartG mbB**
**St.-Cajetan-Straße 41**
**81669 München (DE)**

(56) Entgegenhaltungen:
**EP-A1- 2 725 823**     **WO-A1-2015/124168**
**DE-A1-102005 057 798**   **DE-A1-102014 217 899**

EP 3 530 023 B1

**Beschreibung**

Die Erfindung betrifft eine Gebäude- oder Einfriedungsabschlussöffnungs-und/oder -schließvorrichtung mit einer Gebäude- oder Einfriedungsabschlussöffnungs- und/oder -schließeinrichtung, die einen Aktor, der durch ein Betätigungssignal betätigbar ist, um einen Zugang durch einen Gebäude- oder Einfriedungsabschluss zu ermöglichen oder zu sperren, eine Gebäude- oder Einfriedungsabschlusskommunikationseinrichtung zum Empfangen und/oder Senden von verschlüsselten und/oder signierten Nachrichten und eine individuelle Gebäude- oder Einfriedungsabschlussauthentifizierungseinrichtung pro Gebäude- oder Einfriedungsabschlussöffnungs- und/oder -schließeinrichtung, welche aufgrund Empfang eines aus einem oder mehreren Codeschlüssel erzeugten gültigen Authentifizierungscodes das Betätigungssignal initiiert, umfasst, und wenigstens einem ersten individuellen mobilen Benutzerendgerät, welches eine Benutzerendgerätkommunikationseinrichtung zum Senden und/oder Empfangen von verschlüsselten und/oder signierten Nachrichten und einen Speicher zum Speichern wenigstens eines individuellen Benutzerschlüssels sowie eine Verschlüsselungseinrichtung zum Verschlüsseln und/oder Signierens von Nachrichten mittels des wenigstens einen individuellen Benutzerschlüssels umfasst. Weiter betrifft die Erfindung ein Verfahren zum Betreiben einer Gebäude- oder Einfriedungsabschlussöffnungs- und/oder -schließeinrichtung, die einen Aktor, der durch ein Betätigungssignal betätigbar ist, um einen Gebäude- oder Einfriedungsabschluss zu öffnen und/oder zu schließen und/oder zu entriegeln oder zu verriegeln, eine Gebäude- oder Einfriedungsabschlusskommunikationseinrichtung zum Empfangen und/oder Senden von verschlüsselten und/oder signierten Nachrichten und eine individuelle Authentifizierungseinrichtung pro Gebäude- oder Einfriedungsabschlussöffnungs-und/oder Schließeinrichtung, welche aufgrund Empfang eines aus einem oder mehreren Codeschlüssel erzeugten gültigen Authentifizierungscodes das Betätigungssignal initiiert, umfasst, unter Verwendung wenigstens eines ersten individuellen mobilen Benutzerendgeräts, welches eine Benutzerendgerätkommunikationseinrichtung zum Senden und/oder Empfangen von verschlüsselten und/oder signierten Nachrichten und einen Speicher zum Speichern wenigstens eines individuellen Benutzerschlüssels sowie eine Verschlüsselungseinrichtung zum Verschlüsseln und/oder Signieren von Nachrichten mittels des wenigstens einen individuellen Benutzerschlüssels umfasst.

Einige Beispiele für die Gebäude- oder Einfriedungsabschlussöffnungs- und/oder -schließeinrichtung (nicht abschließend) sind Torantriebe, Türantriebe, Elektroschlösser, Motorschlösser und Türöffner, wie Haustüröffner. Allgemein ist die Gebäude- oder Einfriedungsabschlussöffnungs- und/oder -schließeinrichtung dazu ausgebildet, einen Gebäudeabschluss oder Einfriedungsabschluss wie insbesondere eine Tür oder ein Tor gegen unbefugte Nutzung zu sichern und bei Eingang eines gültigen Betätigungssignals eine Benutzung des Gebäude- oder Einfriedungsabschlusses zuzulassen oder aktiv eine Bewegung eines Flügels des Abschlusses einzuleiten.

Beispiele für Benutzerendgeräte sind insbesondere mobile Datenverarbeitungsgeräte, wie Smartphones, Tablets oder dergleichen. Die Kommunikationseinrichtungen sind insbesondere zur drahtlosen Kommunikation, insbesondere begrenzt auf kurze Distanzen (unter 50m, insbesondere unter 25m) ausgebildet. Vorzugsweise arbeiten die Kommunikationseinrichtungen mittels eines Standardprotokolls. Besonders bevorzugt sind die Kommunikationseinrichtungen zur Kommunikation mittels Bluetooth fähig, insbesondere mittels Niedrig-Energie-Bluetooth (BLE).

Die Erfindung wendet sich insbesondere dem Bedürfnis zu, mittels Standardbenutzerendgeräten, wie insbesondere Smartphones oder dergleichen mobiler Datenverarbeitungsgeräten, und entsprechender Anwendungssoftware (Apps) einen Zugang durch Gebäude- oder Einfriedungsabschlüsse durch Befugte zu ermöglichen, ohne gesonderte individuelle Einrichtungen wie mechanische Schlüssel, gesonderte Chips (RFID-Chips) oder gesonderte individuelle Fernbedienungen nutzen zu müssen.

Aus dem Markt bekannte und beispielsweise in auf dem Markt erhältlichen Schließanlagen, z.B. von der Fa. Danalock oder der Fa. Nuki, implementierte Verfahren zur Steuerung von Schließanlagen setzen auf eine Verbindung zu einem Server, welche bei der Authentifizierung eines Nutzers unterstützt. Hierdurch wird die Nutzungsmöglichkeit eingeschränkt, da ohne eine Internetverbindung die Schließanlage nicht bedient werden kann. Andere Verfahren erlauben zwar das Bedienen der Schließanlage ohne Internetverbindung, jedoch ist der Nutzerkreis auf die maximale Anzahl der Pairing-Partner (meistens max. 8 Personen) beschränkt und das Einrichten neuer Nutzer muss vor Ort erfolgen.

Elektrische Schließanlagen sind sicherheitskritische Elemente in einem Gebäude, welche gegen gängige Angriffe (z.B. Replay-Attacken) gewappnet sein sollten Aktuelle Untersuchungen zeigen jedoch, dass viele auf dem Markt verfügbare Geräte nicht sicher sind.

Serverbasierte Schließverfahren erfordern eine Internetverbindung während oder kurz vor des Schließvorgangs, wodurch zum einen die Einsatzgebiete deutlich Internetverbindung während oder kurz vor des Schließvorgangs, wodurch zum einen die Einsatzgebiete deutlich begrenzt werden (durch fehlende Internetzugänge in Kellern, Gartenlauben oder Ferienhäusern) und zum anderen bei einem Serverausfall der Nutzer sein eigenes Haus nicht mehr betreten kann. Zudem benötigen diese Ansätze deutlich leistungsfähigere Komponenten. Einige Verfahren erfordern die Anwesenheit des Besitzers am Tor zur Weitergabe der Zugangsberechtigung bzw. Anmeldung eines neuen Benutzers. Dies ist aus Benutzersicht wenig komfortabel und in bestimmten Nutzungsszenarien, z.B. bei Ferienhäusern, kaum realisierbar.

Viele Verfahren setzen auf geheime Schlüsselinformationen, welche in allen Produkten oder sogar Produktgruppen eines Herstellers gleich sind. Hierdurch kann durch das Zerlegen eines Produktes oder einer Sicherheitslücke beim Hersteller (Datenverlust durch Mitarbeiter oder Cyber-Angriffe) die Sicherheit einer ganzen Produktgruppe gefährdet werden.

Die DE 10 2014 217899 A1 offenbart ein System und ein Verfahren zur Einrichtung eines beschränkten Zugangs zu einem Fahrzeug.

Die Druckschrift DE 10 2005 057798 A1 beschreibt ein Verfahren, einem Boten temporären Zugang zu einem Depot zu erteilen. Dabei werden öffentliche Schlüssel des Depots und des Überbringers in verschlüsselten und signierten Nachrichten zwischen einem registrierten Benutzer, dem Boten und dem Depot ausgetauscht. Die Nachrichten für den Boten enthalten Informati-onen über den Ort des Depots und die Zeit, für die der Zugang gewährt wird.

Die WO 2015/124168 A1 offenbart ein Verfahren zum Verwalten und zur Vergabe von Zugangsberechtigungen zu gesicherten Räumen, wobei die Kommunikation zwischen einer Datenbank und einem Türschloss über einen ersten kryptographischen Schlüssel und die Kommunikation zwischen einem Mobilgerät und dem Türschloss über einen zweiten kryptographischen Schlüssel gesichert ist.

Aus der EP 2 725 823 A1 ist ein Verfahren zur Benutzerauthentifizierung zwischen einem Mobiltelefon und einem Türschloss über Nahfeldkommunikation bekannt, wobei Benutzerdaten auf einem Server gespeichert werden, der mit dem Mobiltelefon über ein Mobilfunkkommunikationsnetzwerk verbunden ist.

Die Erfindung hat sich zur Aufgabe gestellt, den Zugang durch Gebäude- oder Einfriedungsabschlüsse, insbesondere Türen und Tore, auf einfachere und komfortable und dennoch sichere Art zu ermöglichen und auf einen bestimmten Personenkreis zu begrenzen.

Zum Lösen dieser Aufgaben schafft die Erfindung die Vorrichtung und das Verfahren gemäß den beigefügten unabhängigen Ansprüchen.

Vorteilhafte Ausgestaltungen sind Gegenstand der Unteransprüche.

Die Erfindung schafft gemäß einem Aspekt eine Gebäude- oder Einfriedungsabschlussöffnungs- und/oder -schließvorrichtung mit einer Gebäude- oder Einfriedungsabschlussöffnungs- und/oder - schließeinrichtung, die

einen Aktor, der durch ein Betätigungssignal betätigbar ist, um einen Zugang durch einen Gebäude- oder Einfriedungsabschluss zu ermöglichen oder zu sperren,
eine Gebäude- oder Einfriedungsabschlusskommunikationseinrichtung zum Empfangen und/oder Senden von verschlüsselten und/oder signierten Nachrichten und
eine individuelle Gebäude- oder
Einfriedungsabschlussauthentifizierungseinrichtung pro Gebäude- oder Einfriedungsabschlussöffnungs- und/oder -schließeinrichtung, welche aufgrund Empfang eines aus einem oder mehreren Codeschlüssel erzeugten gültigen Authentifizierungscodes das Betätigungssignal initiiert,

umfasst, und
wenigstens einem ersten individuellen mobilen Benutzerendgerät, welches eine Benutzerendgerätkommunikationseinrichtung zum Senden und/oder Empfangen von verschlüsselten und/oder signierten Nachrichten und einen Speicher zum Speichern wenigstens eines individuellen Benutzerschlüssels sowie eine Verschlüsselungseinrichtung zum Verschlüsseln und/oder Signieren von Nachrichten mittels des wenigstens einen individuellen Benutzerschlüssels umfasst, wobei

a) wenigstens ein zweites individuelles mobiles Benutzerendgerät vorgesehen ist, welches eine Benutzerendgerätkommunikationseinrichtung zum Senden und/oder Empfangen von verschlüsselten und/oder signierten Nachrichten und einen Speicher zum Speichern wenigstens eines temporären Benutzerschlüssels sowie eine Verschlüsselungseinrichtung zum Verschlüsseln und/oder Signierens von Nachrichten mittels des wenigstens einen temporären Benutzerschlüssels umfasst, wobei das erste individuelle mobile Benutzerendgerät dazu ausgebildet ist, eine Zeitbegrenzungsnachricht mit einer Information über eine Zeitbegrenzung für eine temporäre Authentifizierung eines zweiten Benutzers zu empfangen oder aus Benutzervorgaben zu erzeugen und aus der Zeitbegrenzungsnachricht und aus dem individuellen Benutzerschlüssel einen temporären Benutzerschlüssel zu erzeugen, der Information über den individuellen Benutzerschlüssel und die Zeitbegrenzung enthält und an das wenigstens eine zweite individuelle mobile Benutzerendgerät weiter zu geben.

Die Erfindung schafft gemäß einem weiteren Aspekt eine Gebäude- oder Einfriedungsabschlussöffnungs- und/oder -schließvorrichtung mit einer Gebäude- oder Einfriedungsabschlussöffnungs- und/oder - schließeinrichtung, die

einen Aktor, der durch ein Betätigungssignal betätigbar ist, um einen Zugang durch einen Gebäude- oder Einfriedungsabschluss zu ermöglichen oder zu sperren,
eine Gebäude- oder Einfriedungsabschlusskommunikationseinrichtung zum Empfangen und/oder Senden von verschlüsselten und/oder signierten Nachrichten und

eine individuelle Gebäude- oder

Einfriedungsabschlussauthentifizierungseinrichtung pro Gebäude- oder Einfriedungsabschlussöffnungs- und/oder -schließeinrichtung, welche aufgrund Empfang eines aus einem oder mehreren Codeschlüssel erzeugten gültigen Authentifizierungscodes das Betätigungssignal initiiert,

umfasst, und

wenigstens einem ersten individuellen mobilen Benutzerendgerät, welches eine Benutzerendgerätkommunikationseinrichtung zum Senden und/oder Empfangen von verschlüsselten und/oder signierten Nachrichten und einen Speicher zum Speichern wenigstens eines individuellen Benutzerschlüssels sowie eine Verschlüsselungseinrichtung zum Verschlüsseln und/oder Signierens von Nachrichten mittels des wenigstens einen individuellen Benutzerschlüssels umfasst, wobei

b) die individuelle Authentifizierungseinrichtung einen individuellen Geräteschlüssel aufweist und einen Speicher aufweist, in dem eine Benutzer-Identifikations-Information für jedes erste individuelle mobile Benutzerendgerät gespeichert ist,

wobei die Authentifizierungseinrichtung dazu ausgebildet ist, mittels einer eindeutigen Codeberechnung aus dem Geräteschlüssel und der Benutzer-Identifikations-Information einen individuellen Benutzerschlüssel für jedes erste individuelle mobile Benutzerendgerät zu berechnen, wobei das wenigstens eine erste individuelle mobile Benutzerendgerät dazu ausgebildet ist, während einer Registrierungsphase seinen individuellen Benutzerschlüssel pro individueller Authentifizierungseinrichtung zu empfangen und in dem Speicher zu speichern.

Besonders bevorzugt umfasst die Vorrichtung sowohl die Merkmale gemäß a) als auch die Merkmale gemäß b).

Es ist bevorzugt, dass das wenigstens eine zweite individuelle mobile Benutzerendgerät dazu ausgebildet ist, Nachrichten mittels des temporären Benutzerschlüssels zu verschlüsseln und optional über einen verschlüsselten Kanal an die Gebäude- oder Einfriedungsabschlusskommunikationseinrichtung zu senden.

Es ist bevorzugt, dass die Authentifizierungseinrichtung dazu ausgebildet ist, bei Empfang einer signierten Nachricht aus der Benutzer-Identifikations-Information und dem Geräteschlüssel den individuellen Benutzerschlüssel zu erzeugen und damit die mit dem individuellen Benutzerschlüssel oder die mit dem durch den individuellen Benutzerschlüssel erzeugten temporären Benutzerschlüssel signierte Nachricht zu verifizieren.

Es ist bevorzugt, dass die Authentifizierungseinrichtung wiederholt einen nur für einen bestimmten Zeitraum oder eine bestimmte Aktion gültigen temporären öffentlichen Teilschlüssel erzeugt und bei Kontakt mit einem Benutzerendgerät an dieses sendet, wobei das Benutzerendgerät dazu ausgebildet ist, Nachrichten mit Benutzerschlüssel und dem Teilschlüssel zu signieren.

Es ist bevorzugt, dass zur Signierung HMAC eingesetzt wird.

Es ist bevorzugt, dass die Authentifizierungseinrichtung ein Register aufweist, in dem die Benutzer-Identifikations-Information erster individueller autorisierter Benutzer registriert ist.

Es ist bevorzugt, dass die Gebäude- oder Einfriedungsabschlussöffnungs-und/oder-schließvorrichtung derart ausgebildet ist, dass die Registrierung von Benutzern mittels eines ersten mobilen Benutzerendgeräts veränderbar oder löschbar oder blockierbar oder entsperrbar ist.

Es ist bevorzugt, dass sie derart ausgebildet ist, dass eine Registrierung autorisierter Benutzer mittels Nachrichten erfolgt, die mittels eines Registrierungsschlüssels signiert sind, der an dem zu autorisierenden ersten Benutzerendgerät einzugeben oder einzuscannen ist und in der Authentifizierungseinrichtung hinterlegt ist. Die Authentifizierungseinrichtung übermittelt einen mit dem Registrierungsschlüssel verschlüsselten individuellen Benutzerschlüssel an das Benutzerendgerät des autorisierter Benutzers.

Gemäß einem weiteren Aspekt betrifft die Erfindung ein Verfahren zum Betreiben einer Gebäude- oder Einfriedungsabschlussöffnungs- und/oder - schließeinrichtung, die

einen Aktor, der durch ein Betätigungssignal betätigbar ist, um einen Gebäude- oder Einfriedungsabschluss zu öffnen und/oder zu schließen und/oder zu entriegeln oder zu verriegeln,

eine Gebäude- oder Einfriedungsabschlusskommunikationseinrichtung zum Empfangen und/oder Senden von verschlüsselten und/oder signierten Nachrichten und

eine individuelle Authentifizierungseinrichtung pro Gebäude- oder Einfriedungsabschlussöffnungs- und/oder Schließeinrichtung, welche aufgrund Empfang eines aus einem oder mehreren Codeschlüssel erzeugten gültigen Authentifizierungscodes das Betätigungssignal initiiert,

umfasst, unter Verwendung wenigstens eines ersten individuellen mobilen Benutzerendgeräts, welches eine Benutzerendgerätkommunikationseinrichtung zum Senden und/oder Empfangen von verschlüsselten und/oder signierten Nachrichten und einen Speicher zum Speichern wenigstens eines individuellen Benutzerschlüssels sowie eine Verschlüsselungseinrichtung zum Verschlüsseln und/oder Signierens von Nachrichten mittels des wenigstens einen individuellen Benutzerschlüssels umfasst, mit den folgenden Schritten a1) bis a6):

a1) Bereitstellen wenigstens eines zweiten individuellen mobilen Benutzerendgerät, das eine Benutzerendgerätkommunikationseinrichtung zum Senden und/oder Empfangen von verschlüsselten und/oder signierten Nachrichten und einen Speicher zum Speichern wenigstens eines temporären Benutzerschlüssels sowie eine Verschlüsselungseinrichtung zum Verschlüsseln und/oder Signierens von Nachrichten mittels des wenigstens einen temporären Benutzerschlüssels umfasst

a2) Empfangen oder Erzeugen einer Zeitbegrenzungsnachricht mit einer Information über eine Zeitbegrenzung für eine temporäre Authentifizierung eines zweiten Benutzers mittels des ersten mobilen Benutzerendgeräts

a3) Erzeugen eines temporären Benutzerschlüssels aus der Zeitbegrenzungsnachricht und aus dem individuellen Benutzerschlüssel, wobei der temporäre Benutzerschlüssel eine Information über den individuellen Benutzerschlüssel und die Zeitbegrenzung enthält,

a4) Weitergabe des temporären Benutzerschlüssels von dem ersten individuellen Benutzerendgerät an das wenigstens eine zweite individuelle mobile Benutzerendgerät und

a5) Erzeugen eines individuellen temporären Authentifizierungscodes aus dem temporären Benutzerschlüssel durch das zweite Benutzerendgerät, so dass der temporäre Authentifizierungscode eine Information über den individuellen Benutzerschlüssel und die Zeitbegrenzung enthält und

a6) Initiieren des Betätigungssignals durch die Authentifizierungseinrichtung, wenn ein temporärer Authentifizierungscode, der einem gültigen individuellen Benutzerschlüssel entspricht, innerhalb eines durch die Zeitbegrenzung bestimmten gültigen Zeitraumes empfangen wird.

Gemäß einem weiteren Aspekt schafft die Erfindung ein Verfahren zum Betreiben einer Gebäude- oder Einfriedungsabschlussöffnungs- und/oder - schließeinrichtung, die

einen Aktor, der durch ein Betätigungssignal betätigbar ist, um einen Gebäude- oder Einfriedungsabschluss zu öffnen und/oder zu schließen und/oder zu entriegeln oder zu verriegeln,

eine Gebäude- oder Einfriedungsabschlusskommunikationseinrichtung zum Empfangen und/oder Senden von verschlüsselten und/oder signierten Nachrichten und

eine individuelle Authentifizierungseinrichtung pro Gebäude- oder Einfriedungsabschlussöffnungs- und/oder Schließeinrichtung, welche aufgrund Empfang eines aus einem oder mehreren Codeschlüssel erzeugten gültigen Authentifizierungscodes das Betätigungssignal initiiert,

umfasst, unter Verwendung wenigstens eines ersten individuellen mobilen Benutzerendgeräts, welches eine Benutzerendgerätkommunikationseinrichtung zum Senden und/oder Empfangen von verschlüsselten und/oder signierten Nachrichten und einen Speicher zum Speichern wenigstens eines individuellen Benutzerschlüssels sowie eine Verschlüsselungseinrichtung zum Verschlüsseln und/oder Signierens von Nachrichten mittels des wenigstens einen individuellen Benutzerschlüssels umfasst, mit den folgenden Schritten:

b1) Registrierung einer Benutzer-Identifikations-Information für jeden ein erstes individuelles Benutzerendgerät nutzenden autorisierten Benutzer,

b2) Berechnen eines individuellen Benutzerschlüssel pro autorisiertem Benutzer mittels eines der individuellen Authentifizierungseinrichtung zugeordneten geheimen Geräteschlüssels und der zugeordneten Benutzer-Identifikations-Information durch eine eindeutige Codeberechnungsroutine und

b3) Senden des individuellen Benutzerschlüssels im Verlauf einer Registrierungsphase an das zugeordnete erste mobile individuelle Benutzerendgerät. Vorzugsweise ist der individuelle Benutzerschlüssel mit dem Registrierungsschlüssel zu verschlüsseln.

Vorzugsweise umfasst das Verfahren:

Empfangen einer mit einem individuellen oder temporären Benutzerschlüssel signierten Nachricht durch die Gebäude- oder Einfriedungsabschlusskommunikationseinrichtung,

Berechnen des individuellen Benutzerschlüssels aus der Benutzer-Identifikations-Information und dem Geräteschlüssel und

Verifizieren der Nachricht mittels des berechneten individuellen Benutzerschlüssels.

Bei einer bevorzugten Ausgestaltung umfasst das Verfahren sowohl die Schritte a1 bis a6 als auch die Schritte b1 bis b3).

Die Kennzeichnung der Schritte und Merkmale mit a), b), a1), a2), b1), b2) dient nur der einfacheren Referenzierung und beinhaltet keinerlei Einschränkung hinsichtlich einer bestimmten Reihenfolge oder Präferenz der so gekennzeichneten Schritte oder Merkmale.

Vorzugsweise umfasst das Verfahren:

Erzeugen eines temporären öffentlichen Teilschlüssels, der für einen bestimmten Zeitraum oder eine bestimmte Aktion gültig ist und Notifikation des temporären öffentlichen Teilschlüssels bei oder vor Kontakt zwischen den Kommunikationseinrichtungen sowie
Signieren von Nachrichten mittels Benutzerschlüssel und Teilschlüssel und Wiederholen dieser Schritte mit einem neuen temporären Teilschlüssel nach Ablauf des Zeitraums oder Vervollständigung der Aktion.

Vorzugsweise umfasst das Verfahren:

Signieren mittels HMAC. Zur Berechnung der HMAC-Signaturen wird bevorzugt SHA256 verwendet.
Vorzugsweise umfasst das Verfahren:
Kommunikation mittels Bluetooth.

Vorzugsweise umfasst das Verfahren:

Registrieren der Benutzer-Identifikations-Information aller erster individueller autorisierten Benutzer in einem Register der Authentifikationseinrichtung.

Vorzugsweise umfasst das Verfahren:

Verändern, Löschen, Blockieren oder Entsperren einer Registrierung von Benutzern mittels eines ersten mobilen Benutzerendgeräts.

Vorzugsweise umfasst das Verfahren:

Registrierung autorisierter Benutzer mittels Nachrichten, die mittels eines Registrierungsschlüssels signiert sind, der an dem zu autorisierenden ersten Benutzerendgerät einzugeben oder einzuscannen ist und in der Authentifizierungseinrichtung hinterlegt ist.
Gemäß einem weiteren Aspekt betrifft die Erfindung ein Computerprogramm mit insbesondere auf einem maschinenlesbaren Träger gespeicherten Programmcodemitteln, eingerichtet zur Durchführung des Verfahrens nach einer der voranstehenden Ausgestaltungen, wenn das Computerprogramm auf einem Endgerät ausgeführt wird. Vorzugsweise handelt es sich dabei um eine App, die auf einem, vorzugsweise Bluetooth-fähigen, Smartphone geladen werden kann.
Die Gebäude- oder Einfriedungsabschlussöffnungs- und/oder -schließvorrichtung ist vorzugsweise zur Durchführung des Verfahrens nach einer der voranstehenden Ausgestaltungen ausgebildet. Bevorzugte Ausgestaltungen des Verfahrens sind auf einer Gebäude- oder Einfriedungsabschlussöffnungs- und/oder - schließvorrichtung gemäß einer der voranstehend beschriebenen Ausgestaltungen durchführbar.
Eine bevorzugte Ausgestaltung der Erfindung bezieht sich insbesondere auf eine zeitbegrenzte Schlüsselweitergabe.
Eine bevorzugte Ausgestaltung der Erfindung bezieht sich auf eine Schlüsselweitergabe zur Weitergabe eines zeitbegrenzten Codeschlüssels zum Öffnen/Schließen von Gebäude- oder Einfriedungsabschlüssen von einem ersten individuellen Benutzer zu einem Benutzer, der zeitbegrenzt durch die Authentifizierungseinheit akzeptiert werden soll.
Bevorzugt erfolgt die Schlüsselweitergabe zwischen der Authentifizierungseinheit und dem Endgerät der ersten Nutzer auf Basis einer Low-Energy-Bluetooth-Verbindung und die Schlüsselweitergabe zeitbegrenzter Schlüssel über dritte Kommunikationswege (QR-Codes, E-Mail, Kurznachrichten).
Insbesondere ist ein Aktor, der zum Öffnen/Schließen oder Entriegeln/Verriegeln eine Gebäude- oder Einfriedungsabschluss ausgebildet ist und durch ein Betätigungssignal betätigbar ist, mit einem Bluetooth-Low-Energy-Gerät verbunden, der auf Empfang eines gültigen Schlüssels (Authentifizierungscode) hin das Betätigungssignal initiiert.
Gemäß einer bevorzugten Ausgestaltung bezieht sich die Erfindung auf ein Verfahren zur Weitergabe zeitbegrenzter Schlüssel für ein Bluetooth-Low-Energy basiertes Schließverfahren für Tore und Türen.
Besonders bevorzugte Ausgestaltung der Erfindung haben insbesondere folgende Vorteile: Ein Bluetooth-Low-Energy-Funkchip kann zum Öffnen und Schließen von Toren und Türen verwendet werden. Der Besitzer ist vorteilhaft in der Lage, anderen Personen dauerhaft oder zeitbegrenzt Zutritt zu einem Raum oder Gebäude zu verschaffen. Die Zugangssteuerung funktioniert vorzugsweise unabhängig von einer Verbindung ins Internet. Durch die Unabhängigkeit vom Internet kann das Gerät an jedem beliebigen Ort (Keller, Waldhütten, Ferienhäuser, Gartenlauben, Schuppen, Lagerräume, entlegene Einfriedungen etc.) eingesetzt werden. Die Zugangssteuerung kann aus Kostengründen hinsichtlich Speicher und Rechenleistung beschränkt sein. Trotzdem können vorzugsweise große Nutzergruppen mit mehr als 100 Personen unterstützt werden. Die Weitergabe von Schlüsseln an Dritte ist vorzugsweise über große Distanzen möglich (z.B. mittels Kurznachricht, oder per Telefon), der Schließvorgang selbst ist jedoch vorzugsweise ohne eine Internetverbindung möglich.

Bevorzugte Ausführungsformen der Erfindung nutzen günstige Hardwarekomponenten und an sich auf anderen Gebieten, wie z.B. der Nachrichtentechnik oder der Informationstechnik zur Datenverschlüsselung und Signierung bekannte kryptographische Verfahren, um sehr großen Benutzergruppen den zeitbegrenzten Zugang zu Gebäuden, Räumen oder Einfriedungen zu ermöglichen. Hierdurch ergibt sich eine gute Skalierbarkeit der Anwendungsszenarien (z.B. privates Haus, Gewerbeimmobilie, Hotelanlage, Einfriedung, Ferienunterkunft).

Bevorzugte Ausgestaltungen des erfindungsgemäßen Verfahrens sind hinsichtlich des Speicherbedarfs sehr genügsam, da nur sehr wenige Informationen auf dem jeweiligen Gerät (insbesondere dem der Gebäude- oder Einfriedungsabschluss zugeordneten Kommunikations- und Authentifizierungs-Gerät) selbst gespeichert werden müssen. Bei einer bevorzugten Ausgestaltung ist die Rechenkomplexität durch die Verwendung von Hash-Funktionen gering.

Vorteilhaft wird nur eine Hash-Funktion benötigt, es müssen keine Public - Private - Key - Verfahren genutzt werden, die wesentlich rechenaufwendiger sind.

In einer bevorzugten Ausgestaltung basiert die Sicherheit eines jeden Gerätes (insbesondere eines jeden stationären Kommunikations- und Authentifizierungs-Gerät) auf einem, vorzugsweise durch die Hardware, zufällig bestimmten Geheimnisses (Geräteschlüssel oder Gerätecode; individuell für jedes Gerät, unbekannt dem Hersteller). Somit wird es nicht möglich sein, die Sicherheit eines Gerätes durch das Zerlegen/Analysieren eines anderen Gerätes zu gefährden, oder die Sicherheit durch Datendiebstahl beim Hersteller zu umgehen.

Vorzugsweise verzichtet das Verfahren bewusst auf die Nutzung von Herstellerspezifischen Schlüsseln als Geheimnis und setzt bei allen Verfahren auf individuelle, generierte, insbesondere Hardware-generierte, Zufallszahlen.

Vorzugsweise ermöglicht das Verfahren das individuelle Sperren von vergebenen Schlüsseln oder Nutzergruppen durch privilegierte Benutzer. Hierdurch können Sicherheitsrisiken durch Schlüsselverluste minimiert werden.

Vorzugsweise muss ein privilegierter Nutzer, welcher einem anderen Person Zugang zum System gewähren möchte, nicht die Schließanlage aufsuchen, sondern kann an jedem beliebigen Ort und jederzeit einen zeitlich begrenzten Schlüssel erzeugen und diesen an die Person weitergeben. Eine Person mit einem zeitlich begrenzten Schlüssel kann diesen Schlüssel jedoch nicht nutzen um anderen Personen Zugang zu gewähren. Vorzugsweise kann somit jederzeit transparent eingesehen werden, welche Person wem Zugang zum System gewährt hat.

Vorzugsweise kann eine (das Verfahren implementierende) Steuerung auf einem embedded-Prozessor eines nrf52-Chips realisiert werden und bietet noch Platz für weitere Steuerungskomponenten, wodurch andere Bauteile und Bauteilgruppen eingespart werden können.

Der Ansatz ermöglicht neue Funktionen zur Steuerung von Toren und Türen, welche aktuelle Ansätze mittels Fernbedienung übertreffen.

Der Aufbau einer kompakten Schaltung mit wenigen Bauteilen ist möglich, so dass eine Integration in eine Türzarge möglich ist.

Die Funktionsbreite besonders bevorzugter Ausgestaltungen umfasst eine Weitergabe von Schlüsseln, die Möglichkeit, große Benutzergruppen mit geringem Hardwareaufwand handzuhaben und/oder gerätespezifische Geheimnisse.

Ein Ausführungsbeispiel wird im Folgenden anhand der beigefügten Zeichnungen näher erläutert. Darin zeigt:

Fig. 1    eine schematische Blockdarstellung einer Ausführungsform einer Gebäude- oder Einfriedungsabschlussöffnungs- und/oder-schließvorrichtung am Beispiel einer Torsteuerung, die hierdurch mittels HMAC signierten Codes betätigbar ist;

Fig. 2    eine schematische Blockdarstellung der Ausführungsform von Fig. 1 zur Darstellung eines Registrierungsprozesses; und

Fig. 3    eine schematische Blockdarstellung der Ausführungsform von Fig. 2 zur Darstellung einer Interaktion zwischen einem nicht-privilegierten Benutzer (wie insbesondere einem Benutzer mit zeitbegrenzter Authentifizierung) und dem Gebäude- oder Einfriedungsabschluss, hier mit dem Tor.

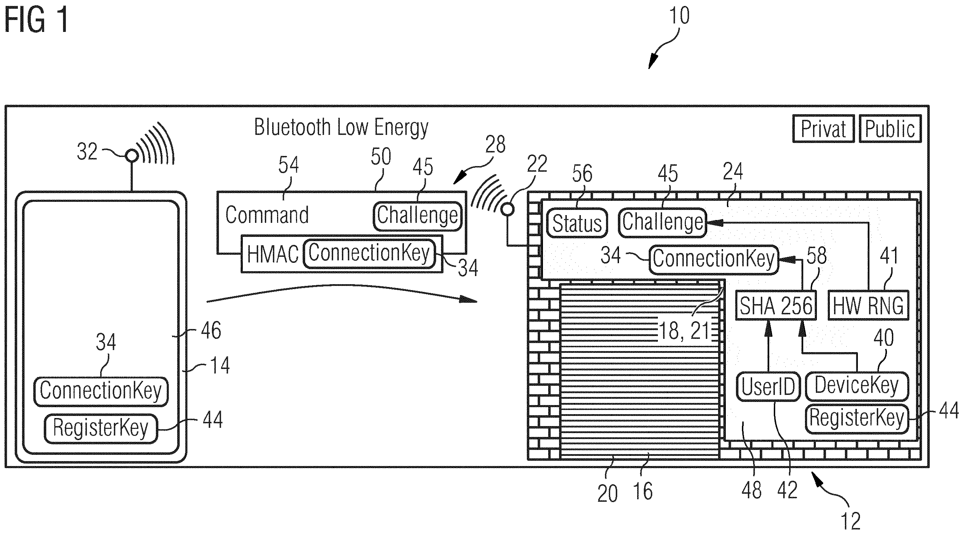

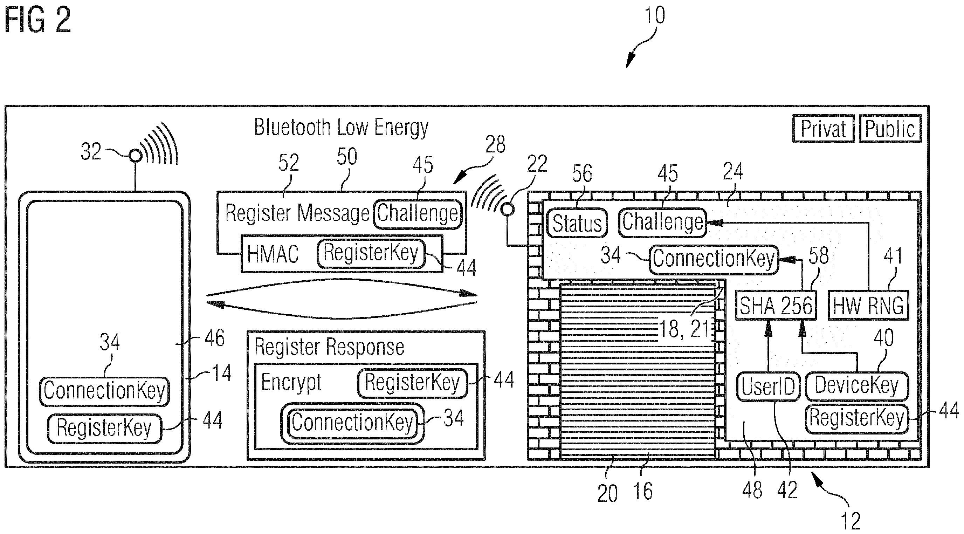

In den Fig. 1 bis 3 ist eine Ausführungsform einer Gebäude- oder Einfriedungsabschlussöffnungs- und/oder -schließvorrichtung 10 während unterschiedlicher Betriebsphasen dargestellt. In Fig. 1 ist ein Normalbetrieb dargestellt, wobei ein autorisierter Benutzer (d.h. ein registrierter Benutzer, hier auch "privilegierter Benutzer" genannt, einen autorisierten Bedienvorgang, wie z.B. ein Öffnen oder Schließen eines automatischen Tores, durchführt, dargestellt. In Fig.

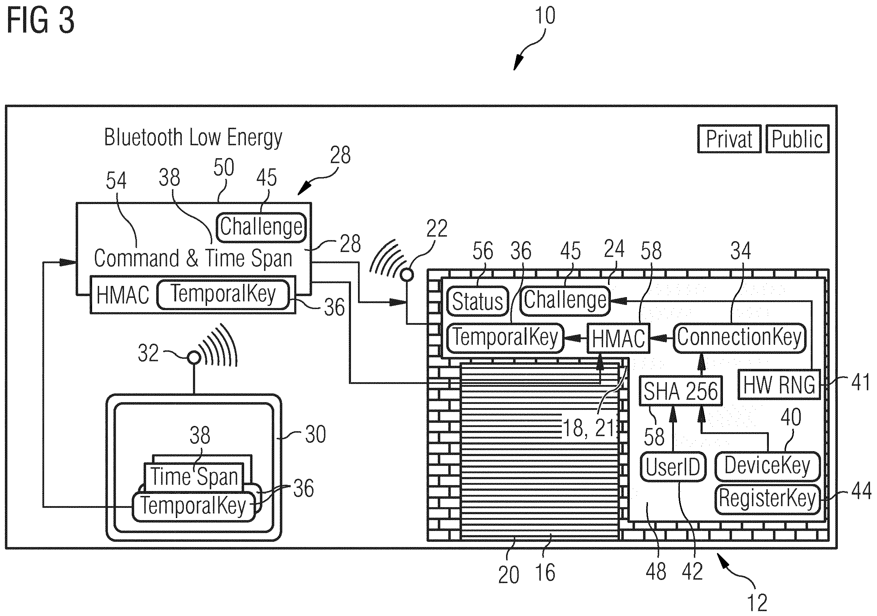

2 ist eine Registrierphase zur Registrierung autorisierter Benutzer dargestellt. In Fig. 3 ist dargestellt, wie ein anderer Benutzer, der durch einen autorisierten privilegierten Benutzer temporär zur Bedienung autorisiert worden ist, einen Bedienvorgang durchführt.

Die Gebäude- oder Einfriedungsabschlussöffnungs- und/oder schließvorrichtung 10 weist eine Gebäude- oder Einfriedungsabschlussöffnungs- und/oder - schließeinrichtung 12 und wenigstens ein erstes individuelles mobiles Benutzerendgerät 14 auf.

Unter Gebäude- oder Einfriedungsabschlussöffnungs- und/oder - schließeinrichtung 12 wird eine Einrichtung verstanden, mittels der ein Zugang durch einen Gebäudeabschluss 16 oder einen Einfriedungsabschluss signalbetätigbar freigeben oder sperren lässt. Beispiele sind Torantriebe oder Türantriebe oder Toröffner oder Türöffner oder Elektroschlösser oder Motorschlösser. In den dargestellten Beispielen ist insbesondere ein Torantrieb 18 zum Antreiben eines als Tor 20 ausgebildeten Gebäudeabschluss 16 dargestellt.

Die Gebäude- oder Einfriedungsabschlussöffnungs- und/oder -schließeinrichtung 12 weist einen Aktor 21, der durch ein Betätigungssignal betätigbar ist, um einen Zugang durch den Gebäude- oder Einfriedungsabschluss 16 zu ermöglichen oder zu sperren, eine Gebäude- oder Einfriedungsabschlusskommunikationseinrichtung 22 zum Empfangen und/oder Senden von verschlüsselten und/oder signierten Nachrichten und eine individuelle Gebäude- oder Einfriedungsabschlussauthentifizierungseinrichtung 24 pro Gebäude- oder Einfriedungsabschlussöffnungs- und/oder -schließeinrichtung 12 auf, welche aufgrund Empfang eines aus einem oder mehreren Codeschlüssel erzeugten gültigen Authentifizierungscodes 28 das Betätigungssignal initiiert.

Bei der dargestellten Ausführungsform ist der Aktor 21 beispielsweise durch den Motor des Torantriebes 18 gebildet. Bei einem Türöffner könnte der Aktor beispielsweise durch einen Solenoid gebildet sein, der eine Tür freigibt, so dass sie durch Zug oder Druck geöffnet werden kann.

Das wenigstens eine erste individuelle mobile Benutzerendgerät 14 ist ein Benutzerendgerät, das im Besitz des registrierten Benutzers ist. Beispiele für die hier erläuterten Benutzerendgeräte14, 30 sind insbesondere mobile Datenverarbeitungsgeräte wie PDAs, Tablets und besonders bevorzugt Smartphones. Als erste Benutzerendgeräte 14 werden die Benutzerendgeräte im Besitz registrierter Benutzer bezeichnet. Die registrierten Benutzer können zeitweise andere Benutzer temporär zur Bedienung autorisieren, indem temporäre Schlüssel (TemporalKey) von deren ersten Benutzerendgeräten 14 zu einem Benutzerendgerät im Besitz dieser temporären Benutzer gesendet werden. Die Benutzerendgeräte der nur temporär zu autorisierenden Benutzer werden hier zweite mobile Benutzerendgeräte 30 genannt.

Die Benutzerendgeräte 14, 30 weisen jeweils eine Benutzerendgerätkommunikationseinrichtung 32 zum Senden und/oder Empfangen von verschlüsselten und/oder signierten Nachrichten und einen Speicher 34 zum Speichern wenigstens eines Benutzerschlüssels 34, 36 sowie eine Verschlüsselungseinrichtung zum Verschlüsseln und/oder Signierens von Nachrichten mittels des wenigstens eines Benutzerschlüssels 34, 36 auf. Die ersten Benutzerendgeräte 14 nutzen hierzu individuelle Benutzerschlüssel 34, die spezifisch für das individuelle erste mobile Benutzerendgerät 14 und für den jeweiligen zu bedienenden Gebäude- oder Einfriedungsabschluss, d.h. insbesondere für die diesem zugeordnete Authentifizierungseinrichtung 24 sind. Die individuellen Benutzerschlüssel 34 werden als individuelles Geheimnis zur Verbindung zwischen den jeweiligen individuellen ersten mobilen Benutzerendgeräten 14 und den individuellen Authentifizierungseinrichtungen 24 genutzt und werden daher im Folgenden auch ConnectionKey 24 genannt.

Die zweiten Benutzerendgeräte 30 nutzen zur Signierung temporäre Benutzerschlüssel 36, die eine Information über den registrierten Benutzer, der die temporäre Autorisation initiiert hat und über die Zeitbegrenzung (Time Span) 38 enthalten.

Demnach ist vorzugsweise wenigstens ein zweites individuelles mobiles Benutzerendgerät 30 vorgesehen, welches ebenfalls eine Benutzerendgerätkommunikationseinrichtung 32 zum Senden und/oder Empfangen von verschlüsselten und/oder signierten Nachrichten und einen Speicher zum Speichern wenigstens eines temporären Benutzerschlüssels 36 sowie eine Verschlüsselungseinrichtung zum Verschlüsseln und/oder Signierens von Nachrichten mittels des wenigstens einen temporären Benutzerschlüssels 36 umfasst, wobei das erste individuelle mobile Benutzerendgerät 14 dazu ausgebildet ist, eine Zeitbegrenzungsnachricht mit einer Information über eine Zeitbegrenzung für eine temporäre Authentifizierung eines zweiten Benutzers zu empfangen oder aus Benutzervorgaben zu erzeugen und aus der Zeitbegrenzungsnachricht und aus dem individuellen Benutzerschlüssel einen temporären Benutzerschlüssel 36 zu erzeugen, der Information über den individuellen Benutzerschlüssel 36 und die Zeitbegrenzung 38 enthält und an das wenigstens eine zweite individuelle mobile Benutzerendgerät 30 weiter zu geben.

Die Benutzerendgerätkommunikationseinrichtung 32 ist in dem dargestellten Ausführungsbeispiel z.B. durch die Bluetooth-Einrichtung des Smartphones gebildet. Als Speicher wird der Smartphone-Speicher genutzt. Die Verschlüsselungseinrichtung wird durch eine Anwendungssoftware (z.B. APP) implementiert.

Die individuelle Authentifizierungseinrichtung 24 weist einen individuellen Geräteschlüssel 40 - im Folgenden auch DeviceKey genannt und einen Speicher oder ein Register auf, in denen eine Benutzer-Identifikations-Information (UserID) 42 für jedes erste individuelle mobile Benutzerendgerät 14 gespeichert ist.

Die Authentifizierungseinrichtung 24 und die Gebäude- oder Einfriedungsabschlusskommunikationseinrichtung 22 sind beispielsweise auf einem BLE-Chip implementiert. Dieser weist insbesondere einen Prozessor, Anwendungssoftware, einen Zufallsgenerator 41 (insbesondere Hardwareimplementiert, HW RNG) und eine Bluetooth-Schnittstelle zur Bluetooth-Verbindung mit niedriger Energie auf.

Die Authentifizierungseinrichtung 24 ist dazu ausgebildet, mittels einer eindeutigen Codeberechnung aus dem Geräteschlüssel 40 und der Benutzer-Identifikations-Information 42 einen individuellen Benutzerschlüssel 34 für jedes erste individuelle mobile Benutzerendgerät 14 zu berechnen.

Das wenigstens eine erste individuelle mobile Benutzerendgerät 14 ist dazu ausgebildet ist, während einer Registrierungsphase seinen individuellen Benutzerschlüssel 34 pro individueller Authentifizierungseinrichtung 24 zu empfangen und in seinem Speicher zu speichern.

Die Registrierung erfolgt unter Signierung mit einem Registrierungsschlüssel (RegisterKey) 44, der z.B. in Begleitunterlagen enthalten ist und durch den Besitzer in das zu registrierende erste Benutzerendgerät eingegeben werden kann oder z.B. mittels eines Scan-Codes gescannt werden kann.

Um Replay-Attacken zu unterbinden, ist die Authentifikationseinrichtung 24 weiter dazu ausgebildet, einen nur temporär für einen Zeitraum oder eine Aktion (ein Bedienvorgang oder auch Folge von Bedienvorgängen) gültigen Teilschlüssel 45 zu erzeugen, der den anderen zur Kommunikation ausgebildeten Geräten 14, 30 zur Verfügung gestellt wird ebenfalls zur Signierung der Nachrichten herangezogen wird. Ein Beispiel für einen solchen Teilschlüssel 45 ist in der folgenden Beschreibung als "Challenge" bezeichnet.

Im Folgenden wird ein Ausführungsbeispiel anhand der Darstellungen in den Fig. 1 bis 3 im Detail näher erläutert. In den Figuren sind öffentliche Informationen (Public) und private Informationen (Privat) mit unterschiedlichen Farben bzw. Symbolen gekennzeichnet.

1.0 Sicherheitskonzept zur Schlüsselweiterqabe

Im Folgenden werden die Komponenten und Verfahren zur Schlüsselerzeugung und Weitergabe im Detail beschrieben und die hierzu vorgesehenen Verfahrensschritte erläutert.

Die Bedienung erfolgt durch Kommunikation zwischen den Kommunikationseinrichtungen 22, 32 mittels Nachrichten, die mittels CodeSchlüsseln 34,36, 44, 45 signiert und/oder verschlüsselt sind.

*1.1 Allgemeines Datenformat:* Eine Nachricht (Packet) besteht aus einem Header ("Header"), einem optionalen/variablen Datenbereich ("Data") und einem Authentifizierungscode 28 insbesondere in Form einer Signatur 50, vorzugsweise einer HMAC-Signatur, mehr insbesondere einer 32-Byte Signatur. Diese Nachrichten werden von einem Smartphone 46 (Beispiel für Benutzerendgerät 14, 30) an das BLE-Gerät 48 (Beispiel für die Gebäude- oder Einfriedungsabschlussöffnungs- und/oder -schließeinrichtung 12, z.B. Türsteuerung) geschickt, um entweder Daten auszutauschen oder Befehle zu übermitteln. Die Signatur 50 hat den Zweck, die Kommunikation in Bezug auf Modifikationen durch Dritte abzusichern und den Befehl des Smartphones 46 gegenüber dem BLE-Gerät 48 zu authentifizieren. Die Signatur (Message Authentication Code) 50 setzt auf ein HMAC-Verfahren. HMAC-Signaturen sind besonders bevorzugte Beispiele für die hier zu verwendenden Authentifizierungscodes.

Einzelheiten zum HMAC-Verfahren sind insbesondere in Wikipedia, Stichwort "Keyed-Hash_Message_Authentification, heruntergeladen am 19.10.2016, als Nichtpatentliteratur der Anmeldung beigefügt, zu entnehmen.

*1.2 Message Authentication Code:* Die Sicherheit der Gebäude- oder Einfriedungsabschluss-Steuerung, wie insbesondere Türsteuerung oder Torsteuerung nutzt "Message Authentication Codes", um den Nutzer gegenüber dem Tor 20 zu verifizieren. Um die Bezeichnungen kurz zu halten wird der "Message Authentication Code" 28 im Folgenden als Signatur 50 bezeichnet. Der Nutzer schickt hierzu den Header, welcher den auszuführenden Befehl 54 enthält und signiert diesen mittels HMAC (Keyed-Hash Message Authentication Code). HMAC wird in RFC 2104, NIST Standard FIPS 198 und in RFC 4868 spezifiziert. Es wird in IPSEC, TLS und SSH eingesetzt und gilt aktuell als sicher und nicht kompromittiert. Die Signatur 50 wird mittels

$$HMAC = HASH(\ (ConnectionKey\ xor\ opad)\ ||\ HASH(\ (ConnectionKey\ xor\ ipad)||$$

$$(Message||Challenge)))$$

berechnet, wobei "||" die Verkettungsoperation und "HASH" die sha256-Hashfunktion bezeichnen sollen. Die Paddings opad und ipad sind den Standards zu entnehmen.

Das gemeinsame Geheimnis zwischen den Kommunikationspartnern Smartphone und Torsteuerung ist der ConnectionKey (Beispiel für einen individuellen Benutzerschlüssel 34), welcher geheim gehalten werden muss. Sollte das Smartphone 46 den Schlüssel 34 weitergeben, so kann jede andere Person die Tür/das Tor 20 damit öffnen. Der digitale ConnectionKey verhält sich somit wie ein physikalischer Schlüssel zu einem herkömmlichen Schloss.

*1.3 ConnectionKey:* Die Bildung des ConnectionKey (individueller Benutzerschlüssel 34) erfolgt mittels Kombination von gerätespezifischem Schlüssel DeviceKey (Geräteschlüssel 40) und Benutzer-Identifikationsnummer UserID (Beispiel für Benutzer-Identifikations-Information 42). Die Konkatenation beider Informationen und das anschließende Ausführen einer Hash-Funktion liefern den ConnectionKey. Der BLE-Chip erzeugt zu einem definierten Zeitpunkt (alternativ bei Montage) einen zufälligen, gerätespezifischen Geräteschlüssel 40 "DeviceKey", welcher nur auf dem Gerät 48 gespeichert ist und niemals ausgeliefert wird. Jeder neue Nutzer erhält eine eindeutige Kennung wie z.B. eine 16Bit Kennung (UserID) bei der Registrierung. Hierbei ermittelt der BLE-Chip einen ConnectionKey mittels sha256: ConnectionKey = SHA256(UserID || DeviceKey)

Der ConnectionKey wird nur auf dem Smartphone 46, aber nicht auf dem BLE-Chip gespeichert. Das Smartphone 46 bietet genug Speicher um eine Vielzahl von Schlüsseln zu speichern, aber der BLE-Chip hat nur einen begrenzten Speicherplatz, sodass die Erzeugung eines abgeleiteten Schlüssels aus einem Hauptschlüssel vorteilhaft ist.

Vorteile des Verfahrens und Ziele:

- Schlüsselexpansion von kurzer UserID auf langen 256 Bit-"ConnectionKey"
- Es werden keine globalen Schlüssel ausgetauscht
- Jeder Teilnehmer hat einen individuellen Benutzerschlüssel 34 (z.B. 256-Bit-Schlüssel), der nicht genutzt werden kann, um die Schlüssel anderer Teilnehmer zu berechnen. Angenommen ein Nutzer kennt seinen eigenen "ConnectionKey", so kann er nicht den zugehörigen DeviceKey" berechnen, da er hierfür die sha256-Funktion umkehren müsste. Ohne den "DeviceKey" kann er nicht die Schlüssel der anderen Benutzer berechnen.
- Speichereinsparung: Der BLE-Chip muss nicht alle Schlüssel speichern, sondern kann sie jederzeit aus der UserID berechnen.
- Löschung/Sperrung von UserIDs mittels Blocking-Listen bei reduzierten Speicheraufwand
- Sperrung aller Schlüssel durch Neugenerierung des DeviceKey

*1.4 Löschung bzw. Sperrung von Nutzern*

Die Sperrung von Nutzern erfolgt über Listen und dem Ersetzen von Schlüsseln.

*2.1. Registrierungsprozess*

a) "Privilegierte Nutzer" (registrierte Benutzer, Besitzer erster Benutzerendgeräte 14):

Die Liste "RootUsers" enthält alle UserIDs privilegierter Nutzer. In aufsteigender Reihenfolge werden UserIDs an RootUser vergeben. Sobald die Kapazität der Liste oder die möglichen UserIDs erschöpft sind oder z.B.ist (bei 16 Bit die Liste dann erschöpft, wenn die UserIDs bei 65535 Nutzern angekommen sind) können im System keine neuen privilegierten Nutzer erstellt werden. Erst durch Erstellung eines neuen "DeviceKey" werden alte UserIDs wieder freigegeben. Hierdurch verfallen alle bisher vergebenen Schlüssel und alle Nutzer müssen neu im System registriert werden. Ein privilegierter Nutzer wird durch Löschung von der "RootUsers"-Liste gesperrt. Die Löschung eines privilegierten Nutzers sperrt automatisch alle zeitlich begrenzten Schlüssel, welche mittels des gesperrten Schlüssels erzeugt wurden oder missbräuchlich zu späteren Zeitpunkten erzeugt werden. Hierzu sind alle privilegierten Nutzer berechtigt.

b) "Nicht privilegierte Nutzer":

Die Sperrliste "BlockedUsers" enthält Kombinationen von UserID und TemporalKey und charakterisiert die zu sperrenden Nutzer über die ID des Zugang gewährenden privilegierten Nutzers und der TemporalKey-Nummer (einzelner Schlüssel oder Schlüsselgruppe).

Jedem auf der Liste "BlockedUsers" vermerkter Nutzer ist automatisch gesperrt. Jeder privilegierte Nutzer darf jeden privilegierten Nutzer sperren bzw. eine Sperrung aufheben. Außerdem kann jeder privilegierte Nutzer die mit seinem Schüssel signierten nicht-privilegierten Nutzer sperren, aufheben lassen sich hingegen auch sperren von nicht-privilegierten Nutzern, die nicht vom eigenen Schüssel signiert wurden

*2.2 DeviceKey*

Jedes Gerät 48 generiert selbstständig einen zufälligen Geräteschlüssel 40, wie insbesondere einen 256-Bit langen DeviceKey. Dieser wird niemals das Gerät 48 verlassen und ist "Hardware basiert" zufällig. Die Zufallszahlen sind aus einer geeignet zu wählenden Quelle (z.B. BLE Stack, externe Hardware) zu beziehen. Bei einer vorteilhaften Ausgestaltung ist die Nutzung von Pseudo-zufälligen Werten bzw. Werten berechnet aus anderen Informationen (wie z.B. Produktnummer) nicht gestattet, da eine Schwächung des "DeviceKey" die Sicherheit des gesamten Systems schwächen würde. Aus diesem DeviceKey werden die ConnectionKey abgeleitet.

*2.3 Challenge* (Beispiel für Teilschlüssel 45)

Der BLE-Chip würfelt zufällig Werte für einen Teilschlüssel 45, wie z.B. eine 32-Bit Challenge aus und stellt sie über eine Notification jedem Gerät 14,30 öffentlich zur Verfügung. Hierbei können Pseudozufallsfolgen oder besser Hardware-generierte Zufallswerte genutzt werden. Jeder Befehl muss bei diesem Ausführungsbeispiel die aktuelle Challenge-Information zur Berechnung der Signatur enthalten, um Replay-Attacken wirksam zu unterbinden. Bei einem Ausführungsbeispiel erzeugt jeder Zustandswechsel des Systems (z.B. Öffnen, Schließen) automatisch eine neue Challenge. Um die zu übertragende Datenmenge zu sparen ist die Challenge vorzugsweise nicht Teil eines Paketes.

*2.4 RegisterKey* (Beispiel für Registrierungsschlüssel 44)

Der "RegisterKey" ist der Zugang zum System der Registrierung von privilegierten Nutzern. Der Besitzer (im Sinne des Produktkäufers) sollte die Weitergabe des "RegisterKey" vermeiden und nur einem sehr vertrauenswürdigen Personenkreis diese Information bereitstellen. Eine Person im Besitz des "RegisterKey" kann beliebige privilegierte Nutzer erzeugen und diese können wieder "nicht-privilegierte" Nutzer erschaffen.
Die Nutzung des "RegisterKey" kann wie folgt geschehen:

1. "Besitzer-zentriert": Der Besitzer hat alleinige Kenntnis über den "RegisterKey". Er erzeugt alle Schlüssel 34 für privilegierte Nutzer und stellt die Schlüssel 34 über eine gesicherte Server-Infrastruktur bereit.
2. "Gruppe": Der "RegisterKey" wird einer vertrauenswürdigen Gruppe bereitgestellt und diese kann den Registrierungsschlüssel 44 beliebig nutzen. Im Missbrauchsfall muss das Gerät 48 zurückgesetzt und der "RegisterKey" geändert werden.

Im Falle einer kompromittierten Schlüsselgeheimnisses kann ein PIN/PUK-Verfahren zum Ändern des "RegisterKey" genutzt werden. Die PIN/PUK-Information sollte getrennt vom Gerät 48 aufbewahrt werden und ist nur zur Änderung des "RegisterKey" zu verwenden.

*3.1 Registrierungsprozess privilegierter Benutzer*

Das Ziel des Registrierungsprozesses ist die Anmeldung eines privilegierten Benutzers (root) über eine optional verschlüsselte und MITM-gesicherte (MITM=Man-In-The-Middle) Verbindung. Eine 128 Bit AES Verschlüsselung kann hierbei durch den Bluetooth-Stack übernommen werden. Die MITM-Sicherung wird durch das Protokoll realisiert. Die Registrierung folgt z.B. dem folgenden Protokoll:

1. Smartphone 48 (als ein erstes individuelles Benutzerendgerät 14) scannt nach BLE-Chip
2. Smartphone 48 verbindet sich mit BLE-Chip3. BLE-Chip
3. BLE-Chip besitzt geheimen RegisterKey (bei Auslieferung in Textform oder als QR-Code in der Betriebsanleitung vermerkt; Alpha-Numerisch; > 128 Bit)
4. Smartphone 48 sendet Registrierungsnachricht (Register Message) 52:

- Data: Username (Alpha-Numerisch, z.B. "Mustermann", Länge 10 Zeichen)
- Signature = HASH((RegisterKey xor opad) || HASH((RegisterKey xor ipad) || (Message||Challenge)))

5. BLE-Chip prüft Signatur und speichert neuen Benutzer, falls erfolgreich (UserID++) UserID = eindeutige Benutzernummer als Zahl (16 Bit) ConnectionKey = SHA256(UserID || DeviceKey)
6. BLE-Chip verschlüsselt [ConnectionKey] mittels Hash des RegisterKey: EncConnectionKey = ConnectionKey xor HASH(RegisterKey)
7. BLE-Chip sendet [UserID,EncConnectionKey] an Smartphone über verschlüsselte Verbindung
8. Smartphone entschlüsselt geheimen Verbindungsschlüssel [ConnectionKey] mittels ConnectionKey = EncConnectionKey xor HASH(RegisterKey)

Bemerkung: Die Verbindung zwischen BLE-Chip 48 und Smartphone 46 kann zumeist nicht zuverlässig gegen MITM-Angriffe geschützt werden, jedoch kann durch den Einsatz des Register-Key der Aufwand zur Bestimmung des ConnectionKey erheblich erhöht werden. Die Nutzung eines wenigstens 256 Bit langen Keys ist zu empfehlen.

*4.1 Schlüsselweitergabe mittels Signaturkette*

Jeder privilegierte Nutzer kann anderen Personen Zugang gewähren. Dabei ist eine zeitlich Begrenzung vorzugeben. Verliert ein privilegierter Nutzer den Zugang zum System, so werden automatisch alle abgeleiteten Schlüssel ungültig.

Ziel des im Folgenden beschriebenen Protokolls ist die Erzeugung eines zeitlich begrenzten Schlüssels (temporärer Benutzerschlüssel 36) bzw. Schlüsselbundes und dessen Austausch zwischen einem privilegierten Nutzers ("Root") und eines nicht-privilegierten Nutzers ("User").

1. Root Smartphone erzeugt eine Nachricht, welche die Zeitbegrenzungsnachricht, die GruppenID und die UserID in einer Nachricht zusammenfasst und berechnet hierzu die zugehörige Signatur. Die Signatur bekommt anschließend die Rolle eines temporären Benutzerschlüssels 36 ("TemporalKey") für den nicht-privilegierten Nutzer. Der nicht-privilegierte Nutzer verwendet den TemporalKey als ConnectionKey zur Signierung seiner eigenen Befehle zur Tür-/Torsteuerung. Aus dem TemporalKey kann nicht der ConnectionKey des Root-Benutzers errechnet werden. Soll einem Benutzer für sich wiederholende Zeiträume der Zugang gewährt werden, so wird für jeden Zeitabschnitt ein separater Schlüssel errechnet und alle Schlüssel werden in einem Schlüsselbund zusammenfasst.

$$\text{TemporalKey} = \text{HASH( (ConnectionKey xor opad) } \| \text{ HASH( (Connection-Key xor ipad) } \| \text{ (Message)))}$$

2. Das Root Smartphone sendet den Schlüsselbund, welcher eine Menge von Kombinationen [Message,TemporalKey] darstellt über einen sicheren Kanal an den nicht-privilegierten Benutzer. Jeder temporäre Benutzerschlüssel 36 ist für einen begrenzten Zeitraum [StartTime, EndTime] gültig, sich wiederholende Zeiträume werden einzeln definiert.

3. Tür-/Torsteuerung durch privilegierte bzw. nicht-privilegierte Nutzer: Das Smartphone des temporären Benutzers (Beispiel für das zweite Benutzerendgerät 30) scannt nach Advertisement-Paketen des ihm bekannten Tores 20. Sobald Daten eines ihm bekannten Tores 20 angezeigt werden, extrahiert die App-Software relevante Daten zum Zustand aus dem Advertisement-Paket (z.B. aktuelle Challenge). Wenn der Nutzer eine Interaktion mit dem Tor 20 wünscht drückt er einen entsprechenden Button/Symbol. Daraufhin verbindet sich das Smartphone 30 mit dem BLE-Gerät 48, wodurch das Advertisement gestoppt wird. Über die optional 128 Bit AES verschlüsselte Verbindung werden nun die Pakete vom Smartphone 30 zum BLE-Gerät 48 übertragen. Der Nutzer verwendet den TemporalKey des zeitlich aktuell gültigen temporären Benutzerschlüssels 36 zur Signierung seiner Nachrichten, z.B. Öffnen des Tors. Die Integration der Challenge unterbindet Replay-Attacken.

$$\text{Signature} = \text{HASH( (TemporalKey xor opad) } \| \text{ HASH( (TemporalKey xor ipad) } \| \text{ Message}\|\text{Challenge)))}$$

4. Smartphone 30 des nicht-privilegierter Nutzer sendet Nachricht an das BLE-Gerät 48

5. BLE-Gerät 48 prüft Zeitraum & Challenge, falls eines von beiden nicht den Erwartungen entspricht ignoriert das System die Anfrage.

6. BLE-Gerät 48 berechnet eigenständig den TemporalKey mittels des ihm bekannten ConnectionKey des privilegierten Nutzers, welcher dem nicht-privilegierten Nutzer dem Zugang angeblich gewährt hat. Dann prüft es die Signatur und öffnet gegebenenfalls das Tor.

Bezugszeichenliste:

| | |
|---|---|
| 10 | Gebäude- oder Einfriedungsabschlussöffnungs- und/oder-schließvorrichtung |
| 12 | Gebäude- oder Einfriedungsabschlussöffnungs- und/oder-schließeinrichtung |
| 14 | erstes Benutzerendgerät (registriert, privilegierter Benutzer) |
| 16 | Gebäude- oder Einfriedungsabschluss (z.B. Tor, Tür) |
| 18 | Torantrieb |
| 20 | Tor |

21 Aktor
22 Gebäude- oder Einfriedungsabschlusskommunikationseinrichtung
24 Authentifizierungseinrichtung
28 Authentifizierungscode (signierte Nachricht)
30 zweites Benutzerendgerät (nur temporär autorisierte Benutzer)
32 Benutzerendgerätkommunikationseinrichtung
34 individueller Benutzerschlüssel (ConnectionKey, registrierter Benutzer)
36 temporärer Benutzerschlüssel (TemporalKey, temporärer Benutzer)
38 Information über die Zeitbegrenzung (Time Span) der temporären Benutzungsgestattung
40 Geräteschlüssel (DeviceKey)
41 Zufallsgenerator
42 Benutzer-Identifikations-Information (UserID)
44 Registrierungsschlüssel
45 Teilschlüssel (Challenge)
46 Smartphone
48 BLE-Gerät
50 Signatur
52 Registrierungsnachricht
54 Befehl (Command)
56 Status
58 Codeberechnungsroutine (Verschlüsselung bzw. Signierung)

**Patentansprüche**

1. Gebäude- oder Einfriedungsabschlussöffnungs- und/oder - schließvorrichtung (10) mit
   einer Gebäude- oder Einfriedungsabschlussöffnungs- und/oder - schließeinrichtung (12), die
   einen Aktor (21), der durch ein Betätigungssignal betätigbar ist, um einen Zugang durch einen Gebäude- oder Einfriedungsabschluss (16) zu ermöglichen oder zu sperren,
   eine Gebäude- oder Einfriedungsabschlusskommunikationseinrichtung (22) zum Empfangen und/oder Senden von verschlüsselten und/oder signierten Nachrichten (28) und
   eine individuelle Authentifizierungseinrichtung (28) pro Gebäude- oder Einfriedungsabschlussöffnungs- und/oder -schließeinrichtung (12), welche aufgrund Empfang eines aus einem oder mehreren Codeschlüssel erzeugten gültigen Authentifizierungscodes (28) das Betätigungssignal initiiert,
   umfasst, und
   wenigstens einem ersten individuellen mobilen Benutzerendgerät (14), welches eine Benutzerendgerätkommunikationseinrichtung (32) zum Senden und/oder Empfangen von verschlüsselten und/oder signierten Nachrichten (28) und einen Speicher zum Speichern wenigstens eines individuellen Benutzerschlüssels (34) sowie eine Verschlüsselungseinrichtung zum Verschlüsseln und/oder Signierens von Nachrichten mittels des wenigstens einen individuellen Benutzerschlüssels (34) umfasst, wobei
   die individuelle Authentifizierungseinrichtung (28) einen individuellen Geräteschlüssel (40) aufweist und einen Speicher und/oder Register aufweist, in dem eine Benutzer-Identifikations-Information (42) für jeden ein erstes individuelle mobile Benutzerendgerät (14) nutzenden autorisierten Benutzer gespeichert und/oder registriert ist,
   wobei die Authentifizierungseinrichtung (28) dazu ausgebildet ist, mittels einer eindeutigen Codeberechnung aus dem Geräteschlüssel (40) und der Benutzer-Identifikations-Information (42) einen individuellen Benutzerschlüssel (34) für jedes erste Benutzerendgerät (14) zu berechnen, wobei das wenigstens eine erste Benutzerendgerät (14) dazu ausgebildet ist, während einer Registrierungsphase seinen individuellen Benutzerschlüssel (34) für die jeweilige individuelle Authentifizierungseinrichtung (24) zu empfangen und in dem Speicher zu speichern.

2. Gebäude- oder Einfriedungsabschlussöffnungs- und/oder - schließvorrichtung (10) nach Anspruch 1, **dadurch gekennzeichnet, dass** wenigstens ein zweites individuelles mobiles Benutzerendgerät (30) vorgesehen ist, welches eine Benutzerendgerätkommunikationseinrichtung (32) zum Senden und/oder Empfangen von verschlüsselten und/oder signierten Nachrichten (28) und einen Speicher zum Speichern wenigstens eines temporären Benutzerschlüssels (36) sowie eine Verschlüsselungseinrichtung zum Verschlüsseln und/oder Signierens von Nachrichten mittels des wenigstens einen temporären Benutzerschlüssels (36) umfasst, wobei das erste individuelle mobile Benutzerendgerät (14) dazu ausgebildet ist, eine Information (38) über eine Zeitbegrenzung für eine temporäre Authentifizierung eines zweiten Benutzers zu empfangen oder aus Benutzervorgaben zu erzeugen und aus der Information (38) über die Zeitbegrenzung und aus dem individuellen Benutzerschlüssel (34) einen temporären Benutzerschlüssel (36) zu erzeugen, der Information über den individuellen Benutzerschlüssel (36) und die Zeitbegrenzung (38) enthält und an das wenigstens eine zweite individuelle mobile Benutzerendgerät (30) weiter zu geben,

3. Gebäude- oder Einfriedungsabschlussöffnungs- und/oder - schließvorrichtung (10) gemäß Anspruch 2, **dadurch gekennzeichnet,**
**dass** das wenigstens eine zweite Benutzerendgerät (30) dazu ausgebildet ist, Nachrichten mittels des temporären Benutzerschlüssel (36) zu verschlüsseln und verschlüsselt an die Gebäude- oder Einfriedungsabschlusskommunikationseinrichtung (10) zu senden, und/oder dass die Authentifizierungseinrichtung (24) wiederholt einen nur für einen bestimmten Zeitraum oder eine bestimmte Aktion gültigen temporären Teilschlüssel (45) erzeugt und bei Kontakt mit einem Benutzerendgerät (14, 30) an dieses sendet, wobei das Benutzerendgerät (14, 30) dazu ausgebildet ist, Nachrichten mit Benutzerschlüssel (34, 36) und dem Teilschlüssel (45) zu signieren.

4. Gebäude- oder Einfriedungsabschlussöffnungs- und/oder schließvorrichtung (10) nach einem der voranstehenden Ansprüche, **dadurch gekennzeichnet,**
**dass** die Authentifizierungseinrichtung (24) dazu ausgebildet ist, bei Empfang einer signierten Nachricht (28) aus der Benutzer-Identifikations-Information (42) und dem Geräteschlüssel (40) den individuellen Benutzerschlüssel (34) zu erzeugen und damit die mit dem Benutzerschlüssel (34, 36) signierte Nachricht (28) hinsichtlich der Authentizität und Berechtigung des Nutzers zu prüfen.

5. Gebäude- oder Einfriedungsabschlussöffnungs- und/oder - schließvorrichtung (12) nach einem der voranstehenden Ansprüche, **dadurch gekennzeichnet,**
**dass** sie zur Signierung mittels HMAC und/oder zur Kommunikation mittels Bluetooth ausgebildet ist.

6. Gebäude- oder Einfriedungsabschlussöffnungs- und/oder - schließvorrichtung (10) nach einem der voranstehenden Ansprüche, **dadurch gekennzeichnet,**
**dass** die Gebäude- oder Einfriedungsabschlussöffnungs- und/oderschließvorrichtung (10) derart ausgebildet ist, dass die Registrierung von Benutzern mittels eines ersten mobilen Benutzerendgeräts (14) veränderbar oder löschbar oder blockierbar oder entsperrbar ist.

7. Gebäude- oder Einfriedungsabschlussöffnungs- und/oder - schließvorrichtung (10) nach einem der voranstehenden Ansprüche, **dadurch gekennzeichnet,**
**dass** sie derart ausgebildet ist, dass eine Registrierung autorisierter Benutzer mittels Nachrichten erfolgt, die mittels eines Registrierungsschlüssels (44) signiert sind, der an dem zu autorisierenden ersten Benutzerendgerät (14) einzugeben oder einzuscannen ist und in der Authentifizierungseinrichtung (24) hinterlegt ist.

8. Verfahren zum Betreiben einer Gebäude- oder Einfriedungsabschlussöffnungs- und/oder -schließeinrichtung (12), die
einen Aktor (21), der durch ein Betätigungssignal betätigbar ist, um einen Zugang durch einen Gebäude- oder Einfriedungsabschluss (16) zu ermöglichen oder zu sperren,
eine Gebäude- oder Einfriedungsabschlusskommunikationseinrichtung (32) zum Empfangen und/oder Senden von verschlüsselten und/oder signierten Nachrichten (28) und
eine individuelle Authentifizierungseinrichtung (24) pro Gebäude- oder Einfriedungsabschlussöffnungs- und/oder Schließeinrichtung (12), welche aufgrund Empfang eines aus einem oder mehreren Codeschlüsseln (34, 36, 44, 45) erzeugten gültigen Authentifizierungscodes (28) das Betätigungssignal initiiert,
umfasst, unter Verwendung wenigstens eines ersten individuellen mobilen Benutzerendgeräts (14), welches eine Benutzerendgerätkommunikationseinrichtung (32) zum Senden und/oder Empfangen von verschlüsselten und/oder signierten Nachrichten (28) und einen Speicher zum Speichern wenigstens eines individuellen Benutzerschlüssels (34) sowie eine Verschlüsselungseinrichtung zum Verschlüsseln und/oder Signierens von Nachrichten mittels des wenigstens einen individuellen Benutzerschlüssels (34) umfasst,
mit den folgenden Schritten b1) bis b3):

b1) Registrierung einer Benutzer-Identifikations-Information (42) für jeden ein erstes individuelles Benutzerendgerät (14) nutzenden autorisierten Benutzer in einem Register der Authentifizierungseinrichtung (24),
b2) Berechnen eines individuellen Benutzerschlüssels (34) pro autorisiertem Benutzer mittels eines der individuellen Authentifizierungseinrichtung (24) zugeordneten geheimen Geräteschlüssels (40) und der zugeordneten Benutzer-Identifikations-Information (42) durch eine eindeutige Codeberechnungsroutine (58) durch die Authentifizierungseinrichtung (24) und
b3) Senden des individuellen Benutzerschlüssels (34) im Verlauf einer Registrierungsphase an das zugeordnete erste mobile individuelle Benutzerendgerät (14).

9. Verfahren nach Anspruch 8, weiter **gekennzeichnet durch** die folgenden Schritte a1) bis a6):

a1) Bereitstellen wenigstens eines zweiten individuellen mobilen Benutzerendgeräts (30), das eine Benutzerendgerätkommunikationseinrichtung (32) zum Senden und/oder Empfangen von verschlüsselten und/oder signierten Nachrichten (28) und einen Speicher zum Speichern wenigstens eines temporären Benutzerschlüssels (36) sowie eine Verschlüsselungseinrichtung zum Verschlüsseln und/oder Signierens von Nachrichten mittels des wenigstens einen temporären Benutzerschlüssels (36) umfasst

a2) Empfangen oder Erzeugen einer Information (38) über eine Zeitbegrenzung für eine temporäre Authentifizierung eines zweiten Benutzers mittels des ersten mobilen Benutzerendgeräts (14),

a3) Erzeugen eines temporären Benutzerschlüssels (36) aus der Zeitbegrenzungsinformation (38) und aus dem individuellen Benutzerschlüssel (34), wobei der temporäre Benutzerschlüssel (36) eine Information über den individuellen Benutzerschlüssel (34) und die Zeitbegrenzung (38) enthält,

a4) Weitergabe des temporären Benutzerschlüssels (36) von dem ersten Benutzerendgerät (14) an das wenigstens eine zweite Benutzerendgerät (30) und

a5) Erzeugen eines individuellen temporären Authentifizierungscodes (28) aus dem temporären Benutzerschlüssel (36) durch das zweite Benutzerendgerät (30), so dass der temporäre Authentifizierungscode (28) eine Information über den individuellen Benutzerschlüssel (34) und die Zeitbegrenzung (38) enthält und

a6) Initiieren des Betätigungssignals durch die Authentifizierungseinrichtung (24), wenn ein temporärer Authentifizierungscode (28), der einem gültigen individuellen Benutzerschlüssel (34) entspricht, innerhalb eines durch die Zeitbegrenzung bestimmten gültigen Zeitraumes empfangen wird,

10. Verfahren nach Anspruch 8 oder 9, **gekennzeichnet durch** Empfangen einer mit einem Benutzerschlüssel (34, 36) signierten Nachricht (28) durch die Gebäude- oder Einfriedungsabschlusskommunikationseinrichtung (22), Berechnen des individuellen Benutzerschlüssels (34) aus der Benutzer-Identifikations-Information (42) und dem Geräteschlüssel (40) und Verifikation des Absenders und/oder des Inhaltes der Nachricht (28) mittels des berechneten individuellen Benutzerschlüssels (34).

11. Verfahren nach einem der Ansprüche 8 bis 10, **gekennzeichnet durch**

11.1 Erzeugen eines temporären Teilschlüssels (45), der für einen bestimmten Zeitraum oder eine bestimmte Aktion gültig ist und

11.2 Notifikation des temporären Teilschlüssels (45) bei oder vor Kontakt zwischen den Kommunikationseinrichtungen (22, 32) sowie

11.3 Signierung von Nachrichten mittels Benutzerschlüssel (34, 36) und Teilschlüssel (45) und

11.4 Wiederholen dieser Schritte 11.1 bis 11.3 oder zumindest des Schritts 11.1 mit einem neuen temporären Teilschlüssel (45) nach Ablauf des Zeitraums oder Vervollständigung der Aktion.

12. Verfahren nach einem der Ansprüche 8 bis 11, **gekennzeichnet durch** Signierung mittels HMAC und/oder Kommunikation mittels Bluetooth.

13. Verfahren nach einem der Ansprüche 8 bis 12, **gekennzeichnet durch** Verändern, Löschen, Blockieren oder Entsperren einer Registrierung von Benutzern mittels eines ersten mobilen Benutzerendgeräts (14).

14. Verfahren nach einem der Ansprüche 8 bis 13, **gekennzeichnet durch** Registrierung autorisierter Benutzer mittels Nachrichten, die mittels eines Registrierungsschlüssels (44) signiert sind, der an dem zu autorisierenden ersten Benutzerendgerät (14) einzugeben oder einzuscannen ist und in der Authentifizierungseinrichtung (24) hinterlegt ist.

15. Computerprogramm mit insbesondere auf einem maschinenlesbaren Träger gespeicherten Programmcodemitteln, eingerichtet zur Durchführung der Verfahrensschritte der Authentifizierungseinrichtung (24) nach einem der Ansprüche 8 bis 14, wenn das Computerprogramm auf einem Prozessor ausgeführt wird, und zur Durchführung der Verfahrensschritte des Endgeräts (14,30) nach einem der Ansprüche 8 bis 14, wenn das Computerprogramm auf einem Endgerät (14, 30) ausgeführt wird.

**Claims**

1.  A building or enclosure closure opening and/or closing apparatus (10) comprising
    a building or enclosure closure opening and/or closing device (12) including

    an actuator (21) actuated by an actuating signal to allow or block access through a building or enclosure closure (16),
    a building or enclosure closure communication device (22) for receiving and/or sending encrypted and/or signed messages (28); and
    an individual authentication device (28) per building or enclosure closure opening and/or closing device (12) which initiates the actuation signal on the basis of the receipt of a valid authentication code (28) generated from one or more code keys,

    and comprising
    at least one first individual mobile user terminal (14) comprising a user terminal communication device (32) for transmitting and/or receiving encrypted and/or signed messages (28) and a memory for storing at least one individual user key (34), and an encryption device for encrypting and/or signing messages by means of said at least one individual user key (34), wherein
    the individual authentication device (28) comprises an individual device key (40) and comprises a memory and/or a register having stored and/or registered therein user identification information (42) for each authorized user using a first individual mobile user terminal (14),
    wherein the authentication device (28) is designed to calculate an individual user key (34) for each first user terminal (14) by means of a unique code calculation from the device key (40) and the user identification information (42), wherein the at least one first user terminal (14) is adapted to receive and store in the memory its individual user key (34) for the respective individual authentication device (24) during a registration phase.

2.  Building or enclosure closure opening and/or closing apparatus (10) according to claim 1, **characterized in that** at least one second individual mobile user terminal (30) is provided, comprising a user terminal communication device (32) for sending and/or receiving encrypted and/or signed messages (28) and comprising a memory for storing at least one temporary user key (36), and an encryption device for encrypting and/or signing messages by means of said at least one temporary user key (36), wherein the first individual mobile user terminal (14) is adapted to receive information (38) about a time limit for a temporary authentication of a second user or to generate it from user preferences and to generate from the information (38) about the time limit and from the individual user key (34) a temporary user key (36) containing information about the individual user key (36) and the time limit (38) and to forward it to the at least one second individual mobile user terminal (30).

3.  Building or enclosure closure opening and/or closing apparatus (10) according to claim 2, **characterized in that** the at least one second user terminal (30) is adapted to encrypt and transmit encrypted messages to the building or enclosure closure communication device (10) by means of the temporary user key (36) and/or **in that** the authentication device (24) repeatedly generates a temporary partial key (45) valid only for a specific period of time or for a specific action and, upon contact with a user terminal (14, 30), sends it to the latter, the user terminal (14, 30) being designed to sign messages with user keys (34, 36) and the partial key (45).

4.  Building or enclosure closure opening and/or closing apparatus (10) according to any of the preceding claims, **characterized in that in that** the authentication device (24) is designed to generate the individual user key (34) from the user identification information (42) and the device key (40) on receipt of a signed message (28) and thus to verify the message (28) signed with the user key (34, 36) with respect to the authenticity and authorization of the user.

5.  Building or enclosure closure opening and/or closing apparatus (12) according to any of the preceding claims, **characterized in that** it is designed for signing by means of HMAC and/or for communication via Bluetooth.

6.  Building or enclosure closure opening and/or closing apparatus (10) according to any of the preceding claims, **characterized in that** the building or enclosure closure opening and/or closing apparatus (10) is designed such that the registration of users can be changed or deleted or blocked or unblocked by means of a first mobile user terminal (14).

7.  Building or enclosure closure opening and/or closing apparatus (10) in according to any of the preceding claims, **characterized in that** it is designed in such a way that authorized users are registered by means of messages which are signed by means of a registration key (44) which is to be entered or scanned at the first user terminal (14) to be authorized and is stored in the authentication device (24).

8. A method for operating a building or enclosure closure opening and/or closing device (12) comprising

an actuator (21) operated by an actuating signal to allow or block access through a building or enclosure closure (16),
a building or enclosure closure communication device (32) for receiving and/or sending encrypted and/or signed messages (28), and
one individual authentication device (24) per building or enclosure closure opening and/or closing apparatus (12) which initiates the actuation signal upon receipt of a valid authentication code (28) generated from one or more code keys (34, 36, 44, 45),

using a first individual mobile user device (14) that includes a user terminal communication device (32) for sending and/or receiving encrypted and/or signed messages (28) and comprising a memory for storing at least one individual user key (34), and an encryption device for encrypting and/or signing messages using said at least one individual user key (34),
the method comprising the following steps b1) to b3):

b1) registering user identification information (42) for each authorized user in a register of the authentication device (24) using a first individual user terminal (14),
b2) calculating an individual user key (34) per authorized user using a secret device key (40) associated with the individual authentication device (24) and the associated user identification information (42) by a unique code calculation routine (58) by the authentication device (24), and
b3) sending the individual user key (34) to the associated first mobile individual user terminal (14) during a registration phase.

9. Method according to claim 8, further **characterized by** the following steps a1) to a6):

a1) providing at least one second individual mobile user terminal (30) comprising a user terminal communication device (32) for sending and/or receiving encrypted and/or signed messages (28) and a memory for storing at least one temporary user key (36), and an encryption device for encrypting and/or signing messages by means of the at least one temporary user key (36),
a2) receiving or generating information (38) about a time limit for a temporary authentication of a second user by means of the first mobile user terminal (14),
a3) generating a temporary user key (36) from the time limit information (38) and from the individual user key (34), wherein the temporary user key (36) contains information about the individual user key (34) and the time limit (38),
a4) forwarding the temporary user key (36) from the first user terminal (14) to the at least one second user terminal (30), and
a5) generating an individual temporary authentication code (28) from the temporary user key (36) by the second user terminal (30) so that the temporary authentication code (28) contains information about the individual user key (34) and the time limit (38), and
a6) initiating the actuation signal by the authentication device (24) when a temporary authentication code (28) corresponding to a valid individual user key (34) is received within a valid time period determined by the time limit.

10. Method according to claim 8 or 9, **characterized by** receiving a message (28) signed with a user key (34, 36) by the building or enclosure closure communication device (22), calculating the individual user key (34) from the user identification information (42) and the device key (40), and verifying the sender and/or the content of the message (28) by means of the calculated individual user key (34).

11. Method according to one of claims 8 to 10, **characterized by**

11.1 creating a temporary partial key (45) valid for a certain period or action and
11.2 notification of the temporary partial key (45) at or before contact between the communication devices (22, 32) and
11.3 signing messages using user keys (34, 36) and partial keys (45) and

11.4 repeating these steps 11.1 to 11.3 or at least step 11.1 with a new temporary partial key (45) after the expiration of the period or completion of the action.

12. Method according to any of claims 8 to 11, **characterized by** signing by means of HMAC and/or communication via Bluetooth.

13. Method according to any of claims 8 to 12, **characterized by** modifying, deleting, blocking or unblocking a registration of users by means of a first mobile user device (14).

14. Method according to one of claims 8 to 13, **characterized by** registration of authorized users by means of messages signed by means of a registration key (44) to be entered or scanned at the first user terminal (14) to be authorized and deposited in the authentication device (24).

15. Computer program with program code means stored in particular on a machine-readable carrier and designed for carrying out the method steps of the authentication device (24) according to any of claims 8 to 14 when the computer program is executed on a processor, and for carrying out the method steps of the terminal device (14, 30) according to any of claims 8 to 14 when the computer program is executed on a terminal device (14, 30).

**Revendications**

1. Dispositif d'ouverture et/ou de fermeture de clôture de bâtiment ou d'enceinte (10) comprenant un moyen d'ouverture et/ou de fermeture de clôture de bâtiment ou d'enceinte (12) qui comprend
un actionneur (21) actionné par un signal d'actionnement pour permettre ou interdire l'accès à travers une clôture (16) de bâtiment ou d'enceinte, un dispositif de communication de clôture de bâtiment ou d'enceinte (22) pour la réception et/ou l'envoi de messages cryptés et/ou signés (28), et un dispositif d'authentification individuel (28) par un moyen d'ouverture et/ou de fermeture de clôture de bâtiment ou d'enceinte (12) qui déclenche le signal d'actionnement sur la base de la réception d'un code d'authentification valide (28) généré à partir d'une ou plusieurs clés de code,
en utilisant au moins un premier terminal d'utilisateur mobile individuel (14), comprenant un dispositif de communication de terminal d'utilisateur (32) pour transmettre et/ou recevoir des messages cryptés et/ou signés (28) et une mémoire pour stocker au moins une clé d'utilisateur individuelle (34), et un dispositif de cryptage pour crypter et/ou signer des messages au moyen de ladite au moins une clé d'utilisateur individuelle (34),
dans lequel
le dispositif d'authentification individuel (28) comprend une clé d'appareil individuelle (40) et comprend une mémoire et/ou un registre dans lequel des informations d'identification d'utilisateur (42) sont stockées et/ou enregistrées pour chaque utilisateur autorisé utilisant un premier terminal d'utilisateur mobile individuel (14), lequel le dispositif d'authentification (28) étant configuré pour calculer une clé d'utilisateur individuelle (34) pour chaque premier terminal d'utilisateur (14) au moyen d'un calcul de code unique à partir de la clé d'appareil (40) et des informations d'identification de l'utilisateur (42), ledit au moins un premier terminal d'utilisateur (14) étant configuré pour recevoir et stocker en mémoire sa clé d'utilisateur individuelle (34) pour le dispositif d'authentification individuel respectif (24) pendant une phase d'enregistrement.

2. Dispositif d'ouverture et/ou de fermeture de clôture de bâtiment ou d'enceinte (10) selon la revendication 1, **caractérisé en ce qu'**il est prévu au moins un deuxième terminal d'utilisateur mobile individuel (30) comprenant un dispositif de communication de terminal d'utilisateur (32) pour l'envoi et/ou la réception de messages cryptés et/ou signés (28) et une mémoire pour le stockage d'au moins une clé d'utilisateur temporaire (36), et un dispositif de cryptage pour le cryptage et/ou la signature de messages au moyen de ladite au moins une clé d'utilisateur temporaire (36), le premier terminal d'utilisateur mobile individuel (14) étant configuré pour recevoir des informations (38) sur une limite de temps pour une authentification temporaire d'un deuxième utilisateur ou pour générer lesdites informations (38) à partir des défauts de l'utilisateur et pour générer à partir de la clé d'utilisateur individuelle (34) une clé d'utilisateur temporaire (36) qui contient des informations concernant la clé d'utilisateur individuelle (36) et la limite de temps (38) et pour transmettre lesdites informations à au moins un deuxième terminal d'utilisateur mobile individuel (30).

3. Dispositif d'ouverture et/ou de fermeture de clôture de bâtiment ou d'enceinte (10) selon la revendication 2, **caractérisé en ce que** ledit au moins un deuxième terminal d'utilisateur (30) est configuré pour crypter des messages au moyen de la clé d'utilisateur temporaire (36) et pour les transmettre de manière cryptée au dispositif de communication de clôture de bâtiment ou d'enceinte (10), et/ou **en ce que** le dispositif d'authentification (24) génère de manière répétée une clé partielle temporaire (45) valable uniquement pour une période de temps déterminée ou pour une action spécifique et l'envoie à un terminal d'utilisateur (14, 30) au contact avec celui-ci, le terminal d'utilisateur (14, 30) étant conçu pour signer des messages avec des clés d'utilisateur (34, 36) et la clé partielle (45).

4. Dispositif d'ouverture et/ou de fermeture de clôture de bâtiment ou d'enceinte (10) selon l'une des revendications précédents, **caractérisé en ce que** le dispositif d'authentification (24) est conçu pour générer la clé individuelle de l'utilisateur (34) à partir des informations d'identification de l'utilisateur (42) et de la clé d'appareil (40) à la réception d'un message signé (28) et ainsi vérifier le message (28) signé avec la clé de l'utilisateur (34, 36) en ce qui concerne l'authenticité et l'autorisation de l'utilisateur.

5. Dispositif d'ouverture et/ou de fermeture de clôture de bâtiment ou d'enceinte (12) selon l'une des revendications précédentes, **caractérisé en ce qu'**il est conçu pour la signature au moyen de HMAC et/ou pour la communication au moyen de Bluetooth.

6. Dispositif d'ouverture et/ou de fermeture de clôture de bâtiment ou d'enceinte (10) selon l'une des revendications précédentes, **caractérisé en ce que** le dispositif d'ouverture et/ou de fermeture de clôture de bâtiment ou de l'enceinte (10) est conçu de manière à ce que l'enregistrement des utilisateurs puisse être modifié ou supprimé ou bloqué ou débloqué au moyen d'un premier terminal d'utilisateur mobile (14).

7. Dispositif d'ouverture et/ou de fermeture de clôture de bâtiment ou d'enceinte (10) selon l'une des revendications précédentes, **caractérisé en ce que**, le dispositif est conçu de telle sorte que les utilisateurs autorisés sont enregistrés au moyen de messages signés au moyen d'une clé d'enregistrement (44) qui doit être introduite ou scannée sur le premier terminal d'utilisateur (14) à autoriser et qui est stockée dans le dispositif d'authentification (24).

8. Procédé de fonctionnement d'un dispositif d'ouverture et/ou de fermeture de clôture de bâtiment ou d'enceinte (10) comprenant

un actionneur (21) actionnable par un signal d'actionnement pour permettre ou interdire l'accès à travers une clôture de bâtiment ou d'enceinte (16),
un dispositif de communication de clôture de bâtiment ou d'enceinte (22) pour la réception et/ou l'envoi de messages cryptés et/ou signés (28), et
un dispositif d'authentification individuel (28) par un moyen d'ouverture et/ou de fermeture de clôture de bâtiment ou d'enceinte (12) qui déclenche le signal d'actionnement sur la base de la réception d'un code d'authentification valide (28) généré à partir d'une ou plusieurs clés de code (34, 36, 44, 45)

en utilisant un premier terminal d'utilisateur mobile individuel (14) qui comprend un dispositif de communication de terminal d'utilisateur (32) pour envoyer et/ou recevoir des messages cryptés et/ou signés (28) et comprenant une mémoire pour stocker au moins une clé d'utilisateur individuelle (34) et un dispositif de cryptage pour crypter et/ou signer des messages au moyen de ladite au moins une clé d'utilisateur individuelle (34),
avec les étapes suivantes b1) à b3) :

b1) l'enregistrement des informations d'identification de l'utilisateur (42) pour chaque utilisateur autorisé utilisant un premier terminal d'utilisateur individuel (14) dans un registre du dispositif d'authentification (24),
b2) calculer une clé d'utilisateur individuelle (34) par utilisateur autorisé en utilisant une clé d'appareil secrète (40) associée au dispositif d'authentification individuel (24) et les informations d'identification de l'utilisateur associées (42) par une routine de calcul de code unique (58) par le dispositif d'authentification (24); et
b3) envoyer la clé d'utilisateur individuelle (34) au premier terminal mobile d'utilisateur individuel attribué (14) pendant une phase d'enregistrement.

9. Procédé selon la revendication 8, **caractérisée en outre par** les étapes a1) à a6) suivantes :

a1) fournir au moins un deuxième terminal d'utilisateur mobile individuel (30) comprenant un dispositif de communication de terminal d'utilisateur (32) pour envoyer et/ou recevoir des messages cryptés et/ou signés (28) et une mémoire pour stocker au moins une clé d'utilisateur temporaire (36), et un dispositif de cryptage pour crypter et/ou signer des messages au moyen de ladite au moins une clé d'utilisateur temporaire (36),
a2) recevoir ou générer des informations (38) sur une limite de temps pour l'authentification temporaire d'un deuxième utilisateur au moyen du premier terminal d'utilisateur mobile (14),

a3) générer une clé d'utilisateur temporaire (36) à partir des informations sur la limite de temps (38) et de la clé d'utilisateur individuelle (34), dans lequel la clé d'utilisateur temporaire (36) contient des informations sur la clé d'utilisateur individuelle (34) et la limite de temps (38),

a4) transmettre la clé d'utilisateur temporaire (36) du premier terminal d'utilisateur (14) à ladite au moins deuxième terminal d'utilisateur (30), et

a5) générer un code d'authentification temporaire individuel (28) à partir de la clé d'utilisateur temporaire (36) par le deuxième terminal d'utilisateur (30) de sorte que le code d'authentification temporaire (28) contienne des informations sur la clé d'utilisateur individuelle (34) et la limite de temps (38), et

a6) déclencher le signal d'actionnement par le dispositif d'authentification (24) lorsqu'un code d'authentification temporaire (28) correspondant à une clé d'utilisateur individuelle valide (34) est reçu dans un délai déterminé par la limite de temps.

10. Procédé selon la revendication 8 ou 9, **caractérisé par** la réception d'un message (28) signé avec une clé d'utilisateur (34, 36) par le dispositif de communication de clôture de bâtiment ou d'enceinte (22), le calcul de la clé d'utilisateur individuelle (34) à partir des informations d'identification de l'utilisateur (42) et de la clé d'appareil (40), et la vérification de l'expéditeur et/ou du contenu du message (28) au moyen de la clé d'utilisateur individuelle calculée (34).

11. Procédé selon l'une des revendications 8 à 10, **caractérisée par**

11.1 générer une clé partielle temporaire (45) valable pour une certaine période ou action et

11.2 notifier la clé partielle temporaire (45) au moment ou avant le contact entre les dispositifs de communication (22, 32) et

11.3 signer des messages à l'aide des clés d'utilisateur (34, 36) et des clés partielles (45) et

11.4 répéter ces étapes 11.1 à 11.3 ou au moins l'étape 11.1 avec une nouvelle clé partielle temporaire (45) après l'expirations de la période ou l'achèvement de l'action.

12. Procédé selon l'une des revendications 8 à 11, **caractérisée par** la signature au moyen de HMAC et/ou la communication au moyen de Bluetooth.

13. Procédé selon l'une des revendications 8 à 12, **caractérisée par** la modification, la suppression, le blocage ou le déblocage d'un enregistrement d'utilisateurs au moyen d'un premier terminal d'utilisateur mobile (14).

14. Procédé selon l'une des revendications 8 à 13, **caractérisé par** l'enregistrement des utilisateurs autorisés au moyen de messages signés au moyen d'une clé d'enregistrement (44) qui doit être entrée ou scannée sur le premier terminal d'utilisateur (14) à autoriser et qui est déposée dans le dispositif d'authentification (24).

15. Programme d'ordinateur avec des moyens de code de programme stockés en particulier sur un support lisible par machine, conçu pour exécuter les étapes de méthode du dispositif d'authentification (24) selon l'une des revendications 8 à 14 si le programme d'ordinateur est exécuté sur un processeur, et pour exécuter les étapes de méthode du terminal (14, 30) selon l'une des revendications 8 à 14 si le programme d'ordinateur est exécuté sur un terminal (14, 30).

FIG 1

Bluetooth Low Energy

Privat | Public

EP 3 530 023 B1

Command   Challenge
HMAC | ConnectionKey

Status | Challenge
ConnectionKey
SHA 256 | HW RNG
UserID | DeviceKey
RegisterKey

ConnectionKey
RegisterKey

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014217899 A1
- DE 102005057798 A1
- WO 2015124168 A1
- EP 2725823 A1